# EUROPÄISCHE PATENTSCHRIFT

(11) **EP 1 494 610 B1**
(45) Veröffentlichungstag und Bekanntmachung des Hinweises auf die Patenterteilung: **19.09.2007**
(21) Anmeldenummer: 03720268.6
(22) Anmeldetag: 11.04.2003
(51) Int. Cl.: A61C 15/04, A61C 17/34

(54) **MASCHINELLE INTERDENTALBÜRSTE, INTEGRIERT IN EINE ELEKTRISCH BETRIEBENE ZAHNBÜRSTE**
MECHANICAL INTERDENTAL BRUSH INTEGRATED INTO AN ELECTRIC TOOTHBRUSH
BROSSE INTERDENTAIRE MECANIQUE INTEGREE DANS UNE BROSSE A DENTS ELECTRIQUE

(30) Priorität: 16.04.2002 DE 10216755
(43) Veröffentlichungstag der Anmeldung: 12.01.2005
(73) Patentinhaber: Wilkens, Harald, 38100 Braumschweig (DE)
(72) Erfinder: Wilkens, Harald, 38100 Braumschweig (DE)
(74) Vertreter: Müller, Wolfram Hubertus
(86) Internationale Anmeldenummer: PCT/DE2003/001208
(87) Internationale Veröffentlichungsnummer: WO 2003/086231

(56) Entgegenhaltungen:
- EP-A- 1 093 770
- WO-A-01/10268
- WO-A-98/36703
- DE-U- 29 600 255
- US-A- 5 836 030
- US-B1- 6 349 442
- PATENT ABSTRACTS OF JAPAN vol. 1998, no. 08, 30. Juni 1998 (1998-06-30) & JP 10 066704 A (MATSUSHITA ELECTRIC WORKS LTD), 10. März 1998 (1998-03-10)

## Beschreibung

### 1. Intermittierend vorgeschobene Bürste

Die vorliegende Erfindung betrifft eine Zahnbürste mit einer universell einsetzbare Kombination aus Haupt- und Nebenbürste, insbesondere eine Elektro-Zahnbürste mit integrierter Interdentalbürste nach Anspruch 1.

Sollen Gegenstände mit unregelmäßigen Oberflächen gründlich und schonend von oberflächlichen Auflagerungen gereinigt werden, so ist das mit herkömmlichen Mitteln oft nur mühselig möglich. Zusätzlich zu geeigneten Hauptreinigungsgeräten wie Bürsten müssen Spalten, Hohlräume und Unterschneidungen mit entsprechenden Hilfsmitteln arbeitsintensiv gesäubert werden..

Zerklüftete Oberflächen, wie sie beispielsweise das menschliche Gebiss aufweist, können mit den derzeit verfügbaren Hand- und Elektrobürsten allein nicht ausreichend gereinigt werden, weil Spalten, Vertiefungen und Einziehungen, insbesondere die Interdentalräume, nicht erreicht werden. Die zur Durchführung guter Mundhygiene täglich erforderliche Reinigung dieser Problemzonen durch eine korrekte Anwendung von Zahnseide, Interdentalbürsten, Zahnhölzchen oder Munddusche erfordert Geschick, Zeit und Mühe, und unterbleibt deshalb in den meisten Fällen. Selbst bei deren bestimmungsgemäßer Anwendung verbleiben ungereinigte Bereiche, wie beispielsweise interdentale Zahneinziehungen. Die wenigen bisher speziell für den Interdentaleinsatz konstruierten Elektro-Interdentalbürsten stellen eine zusätzliche Investition dar, sie sind ebenso wie die Hand-Interdentalbürsten uneffektiv und umständlich anzuwenden. Sie konnten bisher daher und mangels nennenswerter Verbreitung dem Missstand nicht abhelfen.

In der WO 01/10268 A1 ist eine Zahnbürste beschreiben, deren Zahnbürstenkopf einen neben der normalen Bürstenfläche einen zusätzlichen Dorn zur Interdentalreinigung aufweist. Der Dorn ist in seiner Längsachse verschieblich gelagert und mit einem Stossschutz versehen, der beim einer bestimmten Belastung das Einfahren des Doms erlaubt. Der Stossschutz ist direkt in den Dorn z.B. in Form einer Feder eingebaut, wobei die maximale Größe der Feder durch die Abmaße des Doms begrenzt ist. Der Stossschutz weist somit nur eine bedingte Dämpfungskapazität auf.

Der vorliegenden Erfindung liegt daher das Problem zugrunde, eine Bürstenvorrichtung zu entwickeln, die eine Nebenbürste zur Interdentalreinigung mit einer verbesserten Dämpfungsvorrichtung zur weiteren Verringerung der Verletzungsgefahr aufweist.

### Dieses Problem wird durch die im Patentanspruch 1 aufgeführten Merkmale gelöst:

Die erfindungsgemäße Bürstenvorrichtung weist einen Bürstenschaft und einen Bürstenkopf auf, wobei der Bürstenkopf eine Hauptbürste mit einem Borstenfeld, dessen Spitzen eine Arbeitsfläche ausbilden, und eine Nebenbürste umfasst, wobei die Nebenbürste durch die Antriebswelle angetrieben wird, und die Nebenbürste durch die Antriebswelle intermittierend aus der durch die Spitzen des Borstenfeldes gebildeten Arbeitsfläche aus- und wieder einfahrbar ist. Die Bürstenvorrichtung ist dadurch gekennzeichnet, dass der Protrusionsdruck der Nebenbürste durch eine im Bürstenschaft oder im Bürstenkopf, aber außerhalb der Hauptbürste und Nebenbürste angeordnete Dämpfungsvorrichtung begrenzt ist.

Der mit der Erfindung erzielte weitere Vorteil besteht insbesondere darin, dass die Reinigungseffektivität einer beliebig gestalteten und auf eine beliebige Weise wirkenden (Elektro-)Bürste durch eine integrierte, in kurzen Intervallen opportunistisch aus dem Borstenfeld ausfahrende Nebenbürste gesteigert wird. Diese kombinierte Bürste entfaltet ihre Reinigungswirkung auch in der Tiefe bzw. in der dritten Dimension und damit in Gebieten, die der (Haupt-) Bürste allein nicht zugänglich sind.

Während die Haupt-, d.h. die Zahnbürste die freiliegenden Zahnflächen bürstet, reinigt die Neben-, d.h. die Interdentalbürste die Zahnzwischenräume samt deren Eingängen (den "Korridoren"). Die Reinigungswirkung ist - je nach Gestaltung der Interdentalbürste - bei interdentalen Zahneinziehungen intensiver als bei Verwendung von Zahnseide, sie reinigt ferner prothetische Geschiebe, festsitzende kieferorthopädische Apparaturen, Bänder, Brackets, Verblockungen, nicht zahnseidegängige Zahnzwischenräume, Brückenzwischenglieder, Unterschnitte, Implantate, insuffiziente Restaurationen, Furkationen etc.

Die weiteren Vorteile des intervallweisen Einsatzes der Interdentalbürste bestehen insbesondere darin, dass - durch sie das Eindringen der Interdentalbürste in immer neue Interdentalräume bzw. Reinigungsgebiete überhaupt erst ermöglicht wird, - sie Zahnpasta, und damit deren Reinigungswirkung und Inhaltsstoffe, in diese Räume befördert, - in der inaktiven Phase (wenn die Interdentalbürste eingefahren ist) die Putzwirkung der Zahnbürste gänzlich unbeeinflußt bleibt.

### Aufbau der Hauptbürste (Zahnbürste) mit Integrierter Nebenbürste (Interdentalbürste)

Das Grundprinzip der intermittierend opportunistisch über eine Hauptbürste hinaus- und wieder zurückfahrenden Nebenbürste ist durch mehrere konstruktive Varianten erreichbar:

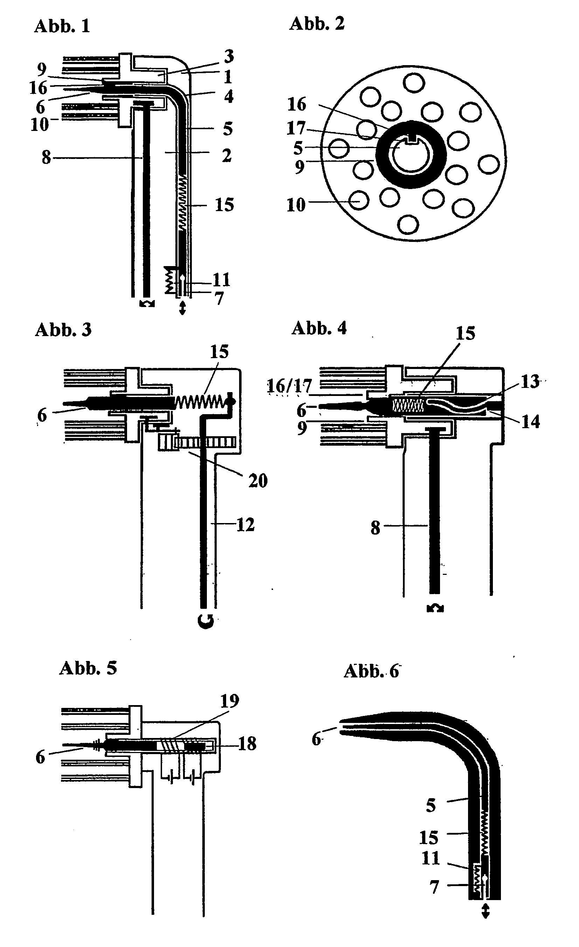

### a. Antrieb über eine flexible Welle (Abb. 1):

In der aus Bürstenkopf (1) und -schaft (2) bestehenden Aufsteckbürste einer oszillierend rotierenden elektrischen Zahnbürste (3) sitzt ein Röhrchen (4), das im Bürstenkopf zur Bürste hin abbiegt und dort deren hohle Achse bildet. In diesem Röhrchen lagert die flexible Antriebswelle (5) der Interdentalbürste (6). Am handstückseitigen Wellenende ist eine Kupplung (7) ausgebildet, die beim Aufsetzen der Aufsteckbürste gleichzeitig mit dem Zahnbürstenantrieb (8) an das Handstück angeschlossen wird. Der Vor- bzw. Rücktrieb der Welle kann via Gestänge über eine vom Zahnbürstenmotor im Handstück mit angetriebene rotierende Scheibe (denkbar sind mehr als etwa 300 bis 600 1/min und bis ca. 10 mm Hub) erfolgen.

Die Welle schiebt die an ihrem Ende sitzende Interdentalbürste während des Zahrbürstenbetriebs über das Niveau der Borstenspitzen aus dem Borstenfeld hinaus; ausreichend sind ca. 6 mm, denkbar sind max.ca. 10 mm. Anschließend wird die Interdentalbürste wieder zurückgefahren, so daß ihre. Spitze wieder auf dem Niveau der Borstenspitzen der Zahnbürste liegt. Ein solcher Zyklus lauft dementsprechend sehr rasch, in weniger als 0,1 - 0,2 Sekunden ab, entsprechend sind es etwa 300 bis 600 oder mehr Intervalle pro Minute. Die die Antriebswelle der Interdentalbürste führende Hohlachse endet innerhalb der Zahnbürste. Zur weiteren Führung der Welle "in Richtung Zahn" ist es vorteilhaft, an der Zahnbürste einen ca. 3 mm weit in das Borstenfeld hinausragenden Stutzen (9) im Außen- von etwa 3. und Innendurchmesser von gut 2 mm auszubilden. Seine Länge sollte so bemessen sein, daß er die Interdentalbürste möglichst weit im die Richtung ihres Zielgebietes führt und dennoch genügend Platz zur Gestaltung der Borsten der Interdentalbürste läßt. Er ist damit auch weit genug von Zähnen und Zahnfleisch entfernt, um die Arbeit der Zahnbürste nicht zu behindern.
Das Zahnbürstendesign kann dem bei oszillierend rotierenden Zahnbürsten Üblichen entsprechen Es fehlen jedoch die zentralen Borsten, die mangels Dynamik zum Putzeffekt ohnehin kaum beitragen. Stattdessen ist dort Platz für den Stutzen. Vorteilhaft kann ein geringerer Bürstendurchmesser als üblich sein, denkbar sind ca. 8 mm bei einer Borstenlänge von ca. 10 mm, die Borstenbündel (10) können wie üblich multi-tufted stehen (Abb. 2 zeigt die Aufsicht auf das Borstenfeld mit Stutzen und Welle):
Mittels einer kleinen Zugfeder (11) im Bürstenschaft kann die Welle im Röhrchen gehalten und bei abgeschalteter Interdentalbürste in die rückwärtigste Position gebracht werden, die Interdentalbürste kann so beim Abschalten des Gerätes immer in das Borstenfeld zurückgefahren werden. Auch über eine entsprechende Motorverschaltung kann das Einfahren der Nebenbürste erreicht werden.
Bürsten- wie auch Kupplungsende der Welle können aus festerem Material beschaffen sein; im Bereich der Röhrchenbiegung kann das Material der Welle elastischer und ihr Durchmesser zugunsten höherer Flexibilität geringer gehalten sein. Zur Materialoptimierung kann in Welle bzw. Interdentalbürstenschaft eine Seele aus anderem Material eingelegt sein.

### b. Antrieb über eine rotierende Welle (Abb: 3):

Die Rotation eines Motors im Handstück wird über eine Welle (12) bis in den Bürstenkopf übertragen und erst hier in eine Hubbewegung umgesetzt, die wiederum auf die Interdentalbürste übertragen wird. Über die Welle kann auch die rotierend-oszillierende Zahnbürste angetrieben werden (20). Auch hier kann die Interdentalbürste bei Betriebsende per Feder oder auch per Motorschaltung in die Zahnbürste zurückgefahren werden.

### c. Antrieb durch Umwandlung der Zahnbürstendynamik in eine Interdentalbürstenpro-/retrusion. (Abb. 4);

Eine weitere Möglichkeit, die Interdentalbürste anzutreiben, besteht darin, die Dynamik einer oszillierend rotierenden Zahnbürste über entsprechende Verbindungs- bzw. Übertragungselemente in eine Vor-/Zurückbewegung der Interdentalbürste zu verwandeln.
Ermöglicht werden kann eine derartige Bewegungstransmission beispielsweise durch eine im Bürstenkopfgehäuse befestigte, rotationachsengerecht in ein entsprechendes Gewinde (13) des Interdentalbürstenschaftes ragende möglichst steilgängige Schraube (14). Der mit der oszillierend rotierenden Zahnbürste per Nut verbundene, und damit ebenfalls oszillierend rotierende Interdentalbürstenschaft wird durch die feststehende Schraube je nach Rotationsrichtung pro- und retrudiert.
Vorteilhaft ist hier die durch einfaches Herausziehen bzw. Hineindrücken leichte Austauschbarkeit der Interdentalbürste samt ihrem Schaft.

Möglich sind auch in Spiralnuten auf dem Interdentalbürstenschaft greifende Führungsdorne bzw. -strukturen in der Zahnbürstenbohrung, ("Lippenstiftniechanik"), die bei oszillierender Rotation der Zahnbürste die Interdentalbürste pro- und retrudieren, oder andere Mechanismen zur Umlenkung der - wie auch immer gearteten - Zahnbürstendynamik auf die Interdentalbürste.

Das Einfahren der Interdentalbürste in das Niveau des Borstenfeldes bei Betriebsende kann durch eine Verschaltung erreicht werden, die die Zahnbürste, und mit ihr die Interdentalbürste, beim Abschalten in die entsprechende Position fährt.

### d. Sonstige Antriebsweisen

Alternativ kann die Vorschubbürste auch auf eine beliebige andere. Weise, etwa elektromagnetisch (Abb. 5) per Magnet (18) und Spule (19), pneumatisch oder hydraulisch angetrieben werden. Vorteilhaft wäre dabei, daß Dynamik, Kraft, Dämpfung, Hub und Intervallfrequenz leichter variiert werden könnten: Ein miniaturisierter Antrieb könnte auch komplett im Bürstenkopf untergebracht werden.
Das Prinzip der intermittierend arbeitenden (Interdental-)Bürste läßt sich auch bei beliebig gestalteten anderen (Zahn-) Bürstentypen anwenden. Die Abb. 5 zeigt eine rein vibrativ arbeitende Zahnbürste mit integrierter Interdentalbürste. Vorstellbar sind auch mehrere in eine Hauptbürste integrierte Vorschubbürsten.
Möglich ist auch die Reduzierung des Grundprinzips auf eine rein intermittierend vorgeschobene, gedämpfte Bürste (Abb. 6), welche nicht zur erfindung gehört.
Anstelle einer Kombination aus Haupt-und Nebenbürste sind auch nach dem beschriebenen Prinzip arbeitende Kombinationen aus anderen Reinigungsgeräten denkbar.

### Aufbau der Nebenbürste

Je nach Bestimmung der Kombibürste ist die Gestaltung verschiedener Größen und Ausführungen der Nebenbürste sinnvoll.
Bei einer Kombi-Zahnbürste sollten Form und Größe der Nebenbürste passend zu den individuellen Gegebenheiten wie Zahnstellung und Zahnfleischmorphologie gewählt werden: Die Größe der jeweils verwendbaren Bürste sollte sich nach dem kleinsten vorhandenen Interdentalraum des Benutzers richten.
Für seitlich aus dem Interdentalbürstenschaft herausragende Borsten (Abb.5 und 7-9) ist nur die Strecke zwischen Stutzen und Borstenende der Zahnbürste (ca..7. mm) nutzbar. Anderenfalls würden die Borsten auf dem Stutzen aufsitzen und die Interdentalbürste wäre nicht vollständig in das Borstenfeld der Zähnbürste einfahrbar. Die Länge der Borsten ist durch die Weite der borstenfreien Fläche im Zentrum der Zahnbürste limitiert. Hätte diese etwa 4,5 mm Durchmesser, so wäre hier bis zu einem Durchmesser der Interdentalbürste von etwa 4 mm ausreichend Spielraum für die reibungslose Aktionsfähigkeit beider Bürsten, selbst wenn sich nach einiger Zeit die Borsten der Zahnbürste etwas aufbiegen sollten.
Kleinere Ausführungen der Interdentalbürste, geeignet für Benutzer mit gesunden Zähnfleischverhältnissen und' bei Zahnengstand, könnten an der Spitze einen Durchmesser von ca. 0,25 mm haben, der nach zehn Millimetern auf etwa 1 mm angewachsen sein könnte.
Denkbar ist die borstenlose Gestaltung der kleineren Variante, aber wenigstens der vordere Abschnitt von ca. fünf mm sollte borstenlos sein. Zwischen fünftem und siebtem Millimeter könnten kurze, von ca. 0,5 bis - 1 mm aufsteigende Borsten aufgestellt sein. Damit hätte die Interdentalbürste bei einem Schaftdurchmesser an dieser Stelle von ca. 0,7 mm einen Gesamtdurchmesser (incl. Borsten) von maximal 2,7 mm. In ausgefahrener Position würde der borstenlose vordere Abschnitt im Interdentalraum oszillieren; während der Eingang zum-Interdentalraum durch die Borsten gereinigt würde.
Bei größeren Zahnlücken bzw. stärkerem Zahnfleischrückgang vor allem zwischen den. Zähnen können größere Varianten mit mehr und spitzennäher seitlich herausstehenden Borsten verwendet werden
Der Interdentalbürstenschaft, zumindest aber seine Spitze, sollte aus zahnfleischfreundlich elastischem und abgerundetem Kunststoff bestehen. Möglich ist auch ein zweiteiliger, bis etwa zur Mitte massiverer, erst zur Spitze hin flexiblerer Aufbau der Interdentalbürste.
Es sind weitere Versionen von Interdentalbürsten für spezielle Fälle vorstellbar.
Denkbar ist auch eine kürzere und massivere Gestaltung der Interdentalbürste, etwa pinselförmig mit festeren inneren Borsten, die zwar den Interdentalraum nicht völlig durchdringen könnte, jedoch eine gegenüber herkömmlichen (Elektro-)Zahnbürsten bessere Reinigung des Korridors und sonstiger Einziehungen bewirken würde:

### Funktionsweise der Hauptbürste mit integrierter Nebenbürste

Bei gewohntem Aufsetzen des Bürstenkopfes einer rotierenden Zahnbürste auf einen Zahn zeigt die in der Mitte des Borstenfeldes sitzende Interdentalbürste etwa auf die Mitte der Zahnkrone. Dämpfungsbedingt (Ansprüche 2) fahrt die Interdentalbürste dann nicht aus. Erst beim Weiterführen der Bürste zum nächsten Zahn, so wie in den Gebrauchsanweisungen für elektrische Zahnbürsten empfohlen, zielt die Interdentalbürste zeitweise etwa auf den Interdentalraum in der Nähe des Approximalkontaktes. Ihre permanenten und häufigen Ausfahrversuche lassen sie dann leicht den Eingang zum Zahnzwischenraum finden, in den sie- dank der Dämpfung sanft - eindringen kann. Wird die Zahnbürste weitergeführt, so trifft die Interdentalbürste wieder auf Zahnsubstanz und wird durch die Dämpfung so lange am Ausfahren gehindert, bis erneut ein. Zahnzwischenraum erreicht ist.

Die Eindringtiefe wird durch die Dämpfung, die jeweilige Zahnzwischenraumsituation und die Interdentalbürstengestaltung limitiert. Bei dickerer Gestaltung des hinteren Teils der Interdentalbürste wird der äußere Teil des Interdentalraums (der Korridor) gereinigt, der sonst weder beim Zähneputzen noch bei herkömmlichem, meist eher flüchtigem Interdentalraumreinigungsversuch ausreichend gesäubert wird.
Bezogen auf die Antriebsvariante a. ist die Interdentalbürste bei den gedachten 5 bis 10 Zyklen pro Sekunde pro Zyklus etwa 0,05 bis 0,1 sec lang völlig, d.h. bis max. ca. 10 mm über das Zahnbürstenniveau hinaus ausgefahren bzw. fast ausgefahren und etwa 0,05 bis 0,1 sec lang eingefahren bzw. fast eingefahren. Bei den anderen. Antriebsvarianten kommt es zu veränderten Werten, die die Wirksamkeit der Kombibürste jedoch nur unwesentlich beeinflussen.
Bei angenommenen 6000 Oszillationen der Zahnbürste pro Minute, entsprechend 100 Oszillationen pro Sekunde ergeben sich daraus etwa 5 bis 10 Oszillationen pro Interdentalgang.
In etwa der Häfte der Einsatzzeit verläuft die Arbeit der Zahnbürste unbeeinflußt wie gewohnt, weil die Interdentalbürste weitestgehend eingefahren ist. In der anderen Hälfte der Einsatzzeit schiebt die Welle die Interdentalbürste vor, wobei es langen, schlanken, flexiblen Ausführungen der Interdentalbürste. u.U. zu Interferenzen beider Bürsten kommen kann. Es gibt daher beim Einsatz einer Kombi-Elektrozahnbürste mehrere Möglichkeiten:
1.: Die Interdentalbürste dringt in einen Reinigungsraum ein und es kommt zu keiner Beeinflussung-der Zahnbürstenarbeit.
2.: Die Interdentalbürste wird bei Kontakt mit einem Hindernis nicht ausgefähren, weil die Dämpfung den Vorschub kompensiert. In diesem Fall wird die Zahnbürstenfunktion ebenfalls nicht beeinflußt.
3.: Die Interdentalbürste wird durch ein Hindernis nur abgelenkt und trotzdem ganz oder teilweise ausgefahren. Dann kann es (nur bei- einer entsprechend grazilen Interdentalbürste) zu Überlagerungserscheinungen zwischen Zahnbürste und. Interdentalbürste kommen, sie kann dann an einer beliebigen. Stelle zwischen den Borsten der Zahnbürste und Zahn bzw. Zahnfleisch liegen. Nur an dieser Stelle und nur während dieses einen Zyklus wird. die Arbeit der Zahnbürstenborsten für eine Zeit von etwa 0,05 bis 0,1 Sekunden beeinflußt. Wegen der Flexibilität der Interdentalbürste fällt die Beeinflussung aber eher gering aus.
Im nächsten Zyklus ist die Konstellation von Zähnen, Zahn- und Interdentalbürste verändert. Jede Variation der Position der Zahnbürste, und sei sie auch nur minimal, macht es unwahrscheinlich, daß-die Interdentalbürste bei erneutem, Nichteindringen in einen Interdentalraum wieder an der gleichen Stelle der Zahnbürste zu liegen kommt und genau dort die Reinigungswirkung beeinflußt. Hinzu kommt, daß die beschriebene Beeinflussung der Borstenarbeit nicht zwangsläufig eine Verschlechterung des Reinigungsergebnisses bedeuten muß.
Möglicherweise kann es bei Überschneidungen beider Bürsten stellenweise durchaus zu verstärkter Reinigungswirkung kommen. Die aus möglichen. Interferenzen beider Bürsten entstehende Beeinflussung der Reinigungswirkung der Zahnbürste ist daher vernachlässigbar gering.
Als Nebeneffekt anzumerken ist eine gegenüber herkömmlichem Putzen gründlichere. Reinigung der Zervikalregion. Hier ist insbesondere bei balkonartig breiter Gingiva die herkömmliche Putzwirkung der Zahnbürste unzureichend, jedenfalls bei der verbreiteten eher laxen Putzweise. Die immer wieder ausfahren wollende Nebenbürste trägt, insbesondere wenn sie an der Spitze etwas breiter gestaltet ist, ihren Reinigungseffekt auch in diese Problemzone. Ebenso wird die Intensität der Reinigung stark profilierter Fissuren der Kauflächen erhöht.

### Anwendungsweise

Die beschriebene Zahnbürste mit integrierter Interdentalbürste reinigt die Zähne samt Zahnzwischenräumen bei normalem Zähneputzen, ohne daß zusätzliche Mundhygienemaßnahmen nötig wären. Dazu wird die Zahnbürste, wie bei Elektro-Zahnbürsten üblich, auf die Zahnfläche gesetzt und langsam unter ständiger Variation der Bürstenkopfstellung während etwa zwei bis drei Minuten über alle Zahnflächen geführt. Es kommt je nach technisch realisierter Intervallfolge in dieser Zeit zu etwa 600 bis mehreren tausend Pro- und Retrusionsszyklen der Interdentalbürste, die zu einem Großteil zu ihrem Eindringen in die erreichbaren Interdentalräume bzw. Plaqueretentionsstellen führen und dort die erwünschte Reinigungswirkung entfalten.
Der Einsatz der Interdentalbürste ist nicht in allen Phasen der Zahnreinigung erforderlich, so daß auch eine wahlweise zum Zahnbürstenbetrieb zuschaltbare Interdentalbürstenfunktion denkbar ist.

Die weitere Ausgestaltung der Erfindung ist in den Patentansprüchen 2 bis-6-angegeben.

### 2.: Dämpfung der Nebenbürste

Um zu verhindern, daß die herausfahrende Nebenbürste zu hohen Druck auf das Objekt ausübt oder die Hauptbürste gar vom Objekt abhebt, ist in den Antrieb der Interdentalbürste, eine Dämpfung (15); wie beispielsweise eine Druckfeder oder ein elastisches, komprimierbares Material, integriert. Die Dämpfung limitiert die ausgeübte Kraft und damit den Vortrieb der Interdentalbürste. Bei direktem Auftreten auf einen Zahn oder ein sonstiges Hindernis wird sie daher nicht bzw. nicht vollständig ausgefahren und Verletzungen von Weichgewebe bzw. sonstige Beschädigungen werden vermieden.
Ein weiterer Vorteil ist die Kompensation der durch die Kopplung hervorgerufenen Torsion der Welle bei einem Antrieb nach a.
Bei einem Antrieb nach c. ist über die Komprimierbarkeit des Nebenbürstenschaftes selbst, was nicht zur Gefindung gehört, und auch über die Elastizität des Gewindes eine Dämpfung möglich: Ab einer vorzugebenden Kraft könnten die Wände der Höhlung dem Druck der Schraube elastisch nachgeben, dadurch. über die Schraube hinweggleiten und damit keinen weiteren. Vortrieb der Interdentalbürste auslösen.

### 3.: Kopplung der Nebenbürste

Eine Steigerung der Reinigungswirkung kann durch die Kopplung der Interdentalbürste an die Hauptbürste erreicht werden, so daß es zur Übertragung der - rotierend oszillierenden, nur vibrierenden oder anderweitig gearteten - Zahnbürstendynamik auf die Interdentalbürste kommt
Um diese Übertragung sicher zu gewährleisten, kann die (hier entsprechend starke) Welle eine bis zur Interdentalbürste durchgehende, ca. 0,5 mm tiefe und breite, und ca. 10 mm lange Nut (16)tragen. In der Bohrung des Stutzens ist eine in die Wellennut greifende Führung (17) von ca..0,5 mm Breite und Höhe gestaltet, die so weit in die Bohrung der Zahnbürste hinein reicht (ca. 5 mm, bis an das Röhrchen), daß sie in allen Positionen der Welle in deren Nut faßt. Über Nut und Führung überträgt sich die Bewegung der Bürste auf die Welle, die Interdentalbürste nimmt daher die Oszillation der Zahnbürste bis in den Schall-, und denkbar ist sogar bis in den Ultraschallbereich hinein, an Die Kopplung kann aber auch über einen Konus oder eine anderweitige Gestaltung von. Welle und. Stutzen erreicht werden. Die Antriebsform c. basiert bereits auf der Kopplung von Haupt- und Nebenbürste, so daß hier keine darüber hinausgehende Verbindung der beide Bürsten nötig ist.
Bei Kopplung der Zahn- mit der Interdentalbürste wird der vordere Teil der Interdentalbürste abhängig von ihrer Elastizität durch die Zentrifugalkraft etwas- ausgelenkt, wodurch das Eindringen in den Interdentalraum zusätzlich erleichtert sein kann. Die Zentrifugalkraft läßt sie auch im Zahnzwischenraum etwas von ihrer. Achse abweichen und Kontakt zu Zähen und Zahnfleisch bekommen, was die Reinigungswirkung verstärkt.

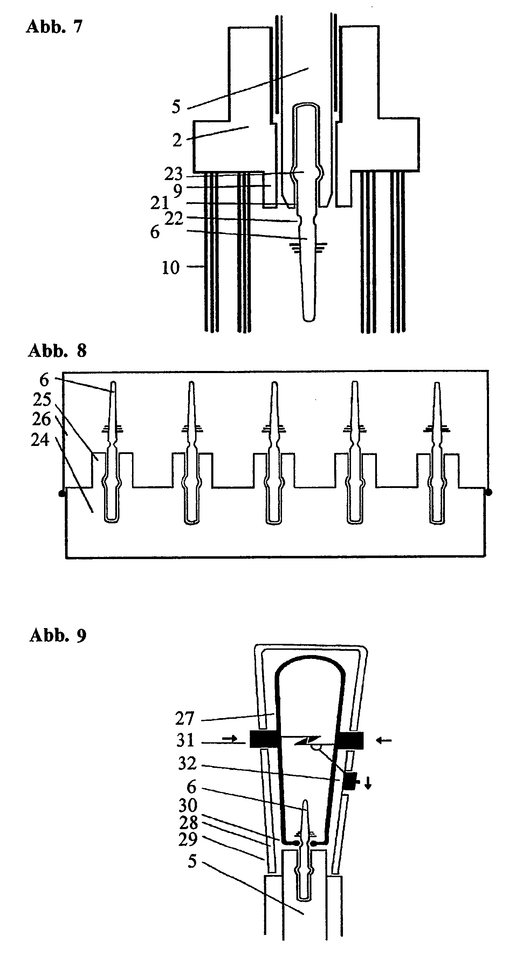

### 4: Auswechselbare maschinelle Nebenbürste (Abb. 7)

Es ist bekannt, daß unter Mundhygienegesichtspunkten vor allem die Beziehung der jeweils benachbarten, individuell sehr unterschiedlich zueinander stehenden Zähne wichtig ist Hier reicht es von sehr eng oder gar verschachtelt bis zu lückig stehenden Zähnen. Häufig kommt Parodontose mit mehr oder weniger stark fortgeschrittenem interdentalem Zahnfleischschwund hinzu. Mundhygieneerschwerend wirken sich mitunter prothetische Versorgungen oder kieferorthopädische Apparaturen aus. Um unter allen Bedingungen die unbedingt notwendige Reinigung der Interdentalräume und der sonstigen, der Zahnbürste nicht zugänglichen Nischen durchführen zu können, muß es mehrere Varianten von Interdentalbürsten geben; Die individuelle Auswahl der geeigneten Interdentalbürste sollte nach zahnärztlicher Beratung stattfinden.

Der im Patentanspruch angegebenen Erfindung liegt das Problem zugrunde,
daß individuell unterschiedliche Interdentalbürstenformen und -größen benötigt werden; die Produktion von Aufsteckbürsten mit fest integrierten Interdentalbürsten in allen denkbaren Ausführungen jedoch sehr aufwendig wäre.
Ein weiteres Problem ist, daβ bei einer kombinierten Zahm/Interdentalbürste die Interdentalbürste je nach Variante und je nach Anwendungsweise schneller verschleißen kann als die eigentliche Zahnbürste.

Diese Probleme werden durch die im Patentanspruch 4 beschriebene in die Welle einsteck und damit austauschbar gestaltete Interdentalbürste gelöst.
Das Arbeitsende der die Interdentalbürste antreibenden Welle (5) endet in eingefahrenem Zustand etwa auf Höhe des Stutzens (9) der rotierenden Zahnbürste (3); Es ist per Wellenaussparung (21) als Kupplung ausgebildet, in die das entsprechend gestaltete, bis ca. 10 mm lange und ca. 1 mm starke Kupplungsende der Interdentalbürste (6) gedrückt wird. Die kugelförmige Verdickung des Interdentalbürstenschaftes (23) auf ca. 1,2 mm Stärke greift in eine entsprechende Weitung der Wellenaussparung und sichert so die Arretierung. Die einwandfreie Funktion der intermittierenden oszillierend rotierenden. Interdentalbürste wird über das Material und die entsprechend griffige Oberflächenstruktur des Interdentalbürstenschaftes, abgestimmt auf das Material der Welle, gewährleistet.
Etwa einen Millimeter vor dem Eintritt der Interdentalbürste in die Welle ist der Schaft zirkulär etwas eingezogen ("die Taille"; 22), um einen sicheren Ansatz für die Branchen des Auswechselinstrumentes zu schaffen.

Der mit der Erfindung erzielte Vorteil besteht insbesondere darin, daß mit der Austauschbarkeit der Interdentalbürste eine große Flexibilität bei der Gestaltung der Mechanik und dadurch der Reinigungswirkung mit nur einem Aufsteckbürstentyp gegeben ist.

Die weitere Ausgestaltung der Erfindung ist in den Patentansprüchen 5, hier wird die Aufbewahrungsform der Ersatz-Interdentalbütsten beschrieben und 6, der Beschreibung einer Montierhilfe für Interdentalbürsten, angegeben.

### 5.: Behältnis für Ersatz-Nebenbürsten. (Abb.8).

Passend zur Kupplung des Bürstenaufsatzes sind diverse Interdentalbürstenmodelle und -größen erhältlich. In einer Kunststoffhalterung (24) sind jeweils auf stutzenartigen Erhebungen (25; Abmessungen ca. 3x3 mm; wie der Stutzen des Bürstenkopfes) mehrere mit der Kupplungsaufnahme der Antriebswelle identische Aussparungen eingelassen, in denen die Ersatz-Interdentalbürsten (6) arretiert sind. Diese durch einen Kunststoffdeckel (26) geschützte, hygienische Aufbewahrungsförm ermöglicht das sichere Entnehmen der Interdentalbürsten per Auswechselinstrument.

### 6.: Auswechselinstrument (Abb.9).

Das Auswechselinstrument dient bei der Herstellung dem sicheren und schonenden Einsetzen der Nebenbürste in die Wellenkupplung oder im Fall der Antriebsvariante c in ihren Antrieb in der Hauptbürste bzw. bei vorzeitigem Verschleiß ihrem Entfernen und Wiedereinsetzen.
Es ist wie eine Zange (27) konstruiert und von einem Gehäuse umgeben (28), etwa 10 cm lang und an der Spitze (in der Ausgestaltung für die oszillierend rotierend intermittierende Interdentalbürste) so breit, daß es sich in das Borstenfeld der Zahnbürste über den Stutzen schieben läßt, d.h. der Innen- beträgt etwa 3 mm und der Außendurchmesser maximal ca: 4,5 mm; da das Borstenfeld soweit borstenfrei ist.
Der Hohlraum im Inneren ist ausgedehnt genug, um alle Varianten von Interdentalbürsten aufnehmen zu können. Etwa vier mm innerhalb des Arbeitsendes (29) des Auswechselinstrumentes greifen die Branchen (30) durch Druck auf die Arretiertasten (31) in die Taille der Interdentalbürste (22) und werden in dieser. Position arretiert. Nun sitzt die Interdentalbürste sicher im Auswechselinstrument und' kann aus ihrem Lager in der Vorratspackung entnommen werden. Das Auswechselinstrument wird nun bis zum Anschlag über den Stutzen geschoben, die Freisetztaste wird gedrückt und das Auswechselinstrument wird entfernt. Jetzt sitzt die Interdentalbürste in der Welle (5).
Das Entfernen der verbrauchten. Interdentalbürste von der Welle geschieht in ähnlicher Weise. Nach seiner Entnahme aus der Welle wird der noch im Auswechselinstrument sitzende Interdentalbürstenschaft mit zwei Fingern gefaßt und die Freisetztaste (32) gedrückt. Nun kann die Interdentalbürste verworfen werden und das Auswechselinstrument ist frei für die Aufnahme einer neuen Interdentalbürste.
Sollte die Welle dem Druck bzw. Zug beim Wechsel der Interdentalbürste ausweichen, so kann in den Bürstenkopf eine kleine Federtaste zum Arretieren der Welle eingesetzt werden.

## Patentansprüche

1. Bürstenvorrichtung mit einem Bürstenschaft (2) und einem Bürstenkopf (1), der
- eine Hauptbürste (3) mit einem Borstenfeld, dessen Spitzen eine Arbeitsfläche ausbilden, und
- eine Nebenbürste (6) umfasst, wobei
- die Nebenbürste (6) durch eine Antriebswelle (5, 12) angetrieben wird und
- die Nebenbürste (6) durch die Antriebswelle (5, 12), intermittierend aus der durch die Spitzen des Borstenfeldes gebildeten Arbeitsfläche aus- und wieder einfahrbar ist,
**dadurch gekennzeichnet, dass**
der Protrusionsdruck der Nebenbürste (6) durch eine im Bürstenschaft (2) oder im Bürstenkopf (1) und dabei außerhalb der Hauptbürste (3) und Nebenbürste (6) angeordnete Dämpfungsvorrichtung (15) begrenzt ist.

2. Vorrichtung nach Anspruch 1, **dadurch gekennzeichnet, dass** die Nebenbürste (6) durch eine andere Welle (5, 12) angetrieben wird als die Hauptbürste.

3. Vorrichtung nach Anspruch 1 oder 2, **dadurch gekennzeichnet, dass** die Welle (5) der Nebenbürste (6) mindestens teilweise flexibel ausgebildet ist, insbesondere eine Krümmung aufweist.

4. Vorrichtung nach einem der vorhergehenden Ansprüche, **dadurch gekennzeichnet, dass** die Dämpfungsvorrichtung (15) als Federelement ausgeführt ist.

5. Vorrichtung nach einem der vorhergehenden Ansprüche, **dadurch gekennzeichnet, dass** die Dämpfungsvorrichtung (15) als elastisches Stauchungsteil ausgeführt ist.

6. Vorrichtung nach einem der vorhergehenden Ansprüche, **dadurch gekennzeichnet, dass** die Dämpfungsvorrichtung (15) als elastisches Gewinde ausgeführt ist.

7. Vorrichtung nach einem der vorhergehenden Ansprüche, **dadurch gekennzeichnet, dass** die Nebenbürste (6) durch kraftübertragende Verbindungselemente (16, 17) mit der Hauptbürste (3) derart gekoppelt ist, dass die Bewegung der Hauptbürste (3) auf die Nebenbürste (6) übertragen wird.

8. Vorrichtung nach einem der vorhergehenden Ansprüche, **dadurch gekennzeichnet, dass** die Nebenbürste (6) hinsichtlich ihrer intermittierenden Bewegung einen Antrieb über die Hauptbürste (3) erfährt.

9. Vorrichtung nach einem der vorhergehenden Ansprüche, **dadurch gekennzeichnet, dass** die Hauptbürste (3) eine Trägerplatte für das Borstenfeld aufweist und die Nebenbürste (6) durch eine Aussparung in der Trägerplatte geführt ist.

10. Vorrichtung nach Anspruch 9, **dadurch gekennzeichnet, dass** die Trägerplatte im Bereich der Aussparung einen Führungsstutzen (9) zur Führung der Nebenbürste (6) ausbildet.

11. Vorrichtung nach Anspruch 10, **dadurch gekennzeichnet, dass** der Führungsstutzen (9) in das Borstenfeld der Hauptbürste hineinragt.

12. Vorrichtung nach einem der vorhergehenden Ansprüche, **dadurch gekennzeichnet, dass** die Nebenbürste (6) getrennt von der Hauptbürste (3) austauschbar ist.

13. Vorrichtung nach einem der vorhergehenden Ansprüche, **dadurch gekennzeichnet, dass** sich die Spitze der Nebenbürste (6) in eingefahrenem Zustand auf der Höhe der durch die Spitzen des Borstenfeldes gebildeten Arbeitsfläche der Hauptbürste (3) befindet.

14. Vorrichtung nach einem der vorhergehenden Ansprüche, **dadurch gekennzeichnet, dass** die Formgestaltung der Nebenbürste (6) individuell auf unterschiedlich zueinander stehende Zähne, prothetischen Versorgungen oder kieferorthopädische Apparaturen von Patienten abgestimmt ist.

15. Vorrichtung nach einem der Ansprüche 2 bis 14, **dadurch gekennzeichnet, dass** die Welle (5) der Nebenbürste (6) zum Zweck der Entnahme der Nebenbürste (6) arretierbar ist.

16. Vorrichtung nach einem der vorhergehenden Ansprüche, **dadurch gekennzeichnet, dass** das Borstenfeld mindestens ein Borstenbündel (10) aufweist.

17. Vorrichtung nach einem der vorhergehenden Ansprüche, **dadurch gekennzeichnet, dass** die Antriebswelle durch einen elektrischen Antrieb angetrieben wird,

## Claims

1. Brush device having a brush shaft (2) and a brush head (1), which
- comprises a main brush (3) with a bristle array, the tips of which constitute a working surface, and
- an auxiliary brush (6),
- the auxiliary brush (6) being driven by a drive shaft (5, 12) and
- the auxiliary brush (6) being capable of intermittent extension and retraction by the drive shaft (5, 12) in relation to the working surface formed by the tips of the bristle array,
**characterized in that**
the protrusion pressure of the auxiliary brush (6) is restricted by a damping device (15) arranged in the brush shaft (2) or in the brush head (1) and as such arranged out of the main brush (3) and the auxiliary brush (6).

2. Device according to claim 1, **characterized in that** the auxiliary brush (6) is driven by a different shaft (5, 12) from the main brush.

3. Device according to claim 1 or 2, **characterized in that** the shaft (5) of the auxiliary brush (6) is at least partially of flexible configuration, and in particular exhibits a curvature.

4. Device according to one of the foregoing claims, **characterized in that** the damping device (15) is configured as a spring element.

5. Device according to one of the foregoing claims, **characterized in that** the damping device (15) is configured as an elastic compression component.

6. Device according to one of the foregoing claims, **characterized in that** the damping device (15) is configured as an elastic helix.

7. Device according to one of the foregoing claims, **characterized in that** the auxiliary brush (6) is connected to the main brush (3) by means of force-transmitting connecting elements (16, 17) in such a way that the movement of the main brush (3) is transmitted to the auxiliary brush (6).

8. Device according to one of the foregoing claims, **characterized in that** the auxiliary brush (6) receives a drive via the main brush (3) for the purpose of its intermittent movement.

9. Device according to one of the foregoing claims, **characterized in that** the main brush (3) exhibits a carrier plate for the bristle array, and the auxiliary brush (6) is guided by a cut-out recess in the carrier plate.

10. Device according to claim 9, **characterized in that** the carrier plate in the area of the cut-out recess constitutes a guide socket (9) for guiding the auxiliary brush (6).

11. Device according to claim 10, **characterized in that** the guide socket (9) projects into the bristle array of the main brush.

12. Device according to one of the foregoing claims, **characterized in that** the auxiliary brush (6) is exchangeable separately from the main brush (3).

13. Device according to one of the foregoing claims, **characterized in that** the tip of the auxiliary brush (6) in the retracted state is present at the level of the working surface of the main brush (3) formed by the tips of the bristle array.

14. Device according to one of the foregoing claims, **characterized in that** the design of the auxiliary brush (6) is adapted individually to the teeth, prostheses or orthodontic devices of patients which vary in terms of their relationship with one another.

15. Device according to one of claims 2 to 14, **characterized in that** the shaft (5) of the auxiliary brush (6) is capable of being locked for the purpose of removing the auxiliary brush (6).

16. Device according to one of the foregoing claims, **characterized in that** the bristle array exhibits at least one bundle of bristles (10).

17. Device according to one of the foregoing claims, **characterized in that** the drive shaft is driven by an electrical drive.

## Revendications

1. Système de brosse comprenant un manche de brosse (2) et une tête de brosse (1) qui comprend
- une brosse principale (3) avec un groupe de poils dont les pointes forment une surface de travail, et
- une brosse secondaire (6),
- la brosse secondaire (6) étant entraînée par un arbre d'entraînement (5, 12) et
- la brosse secondaire (6) pouvant être sortie puis à nouveau rentrée de manière intermittente, hors et dans la surface de travail formée par les pointes du groupe de poils, par le biais de l'arbre d'entraînement (5, 12),
**caractérisé en ce que**
la pression de projection de la brosse secondaire (6) est limitée par un dispositif d'amortissement (15) disposé dans le manche de la brosse (2) ou dans la tête de brosse (1) et en l'occurrence en dehors de la brosse principale (3) et de la brosse secondaire (6).

2. Système selon la revendication 1, **caractérisé en ce que** la brosse secondaire (6) est entraînée par un autre arbre (5, 12) que la brosse principale.

3. Système selon la revendication 1 ou 2, **caractérisé en ce que** l'arbre (5) de la brosse secondaire (6) est réalisé de manière au moins en partie flexible, notamment présente une courbure.

4. Système selon l'une quelconque des revendications précédentes, **caractérisé en ce que** le dispositif d'amortissement (15) est réalisé sous forme d'élément à ressort.

5. Système selon l'une quelconque des revendications précédentes, **caractérisé en ce que** le dispositif d'amortissement (15) est réalisé sous la forme d'une pièce d'écrasement élastique.

6. Système selon l'une quelconque des revendications précédentes, **caractérisé en ce que** le dispositif d'amortissement (15) est réalisé sous la forme d'un filetage élastique.

7. Système selon l'une quelconque des revendications précédentes, **caractérisé en ce que** la brosse secondaire (6) est accouplée à la brosse principale (3) par des éléments de connexion (16, 17) transmettant les forces, de telle sorte que le mouvement de la brosse principale (3) soit transmis à la brosse secondaire (6).

8. Système selon l'une quelconque des revendications précédentes, **caractérisé en ce que** la brosse secondaire (6) subit un entraînement par le biais de la brosse principale (3) en termes de mouvement intermittent.

9. Système selon l'une quelconque des revendications précédentes, **caractérisé en ce que** la brosse principale (3) présente une plaque de support pour le groupe de poils et la brosse secondaire (6) est guidée dans la plaque de support à travers un évidement.

10. Système selon la revendication 9, **caractérisé en ce que** la plaque de support forme dans la région de l'évidement un tube de guidage (9) pour guider la brosse secondaire (6).

11. Système selon la revendication 10, **caractérisé en ce que** le tube de guidage (9) pénètre dans le groupe de poils de la brosse principale.

12. Système selon l'une quelconque des revendications précédentes, **caractérisé en ce que** la brosse secondaire (6) peut être remplacée séparément de la brosse principale (3).

13. Système selon l'une quelconque des revendications précédentes, **caractérisé en ce que** la pointe de la brosse secondaire (6), dans l'état rentré, se trouve à la hauteur de la surface de travail de la brosse principale (3) formée par les pointes du groupe de poils.

14. Système selon l'une quelconque des revendications précédentes, **caractérisé en ce que** la configuration de la brosse secondaire (6) est adaptée individuellement à des dents orientées différemment les unes par rapport aux autres, à des aides prothétiques ou à des appareils orthopédiques pour la mâchoire de patients.

15. Système selon l'une quelconque des revendications 2 à 14, **caractérisé en ce que** l'arbre (5) de la brosse secondaire (6) peut être bloqué afin d'enlever la brosse secondaire (6).

16. Système selon l'une quelconque des revendications précédentes, **caractérisé en ce que** le groupe de poils présente au moins un faisceau de poils (10).

17. Système selon l'une quelconque des revendications précédentes, **caractérisé en ce que** l'arbre d'entraînement est entraîné par un entraînement électrique.
